# DEMANDE DE BREVET EUROPEEN

(11) **EP 3 660 796 A1**
(43) Date de publication de la demande: **03.06.2020**
(21) Numéro de dépôt: 19212009.5
(22) Date de dépôt: 28.11.2019
(51) Int. Cl.: G07F 7/08, G06K 19/07

(54) **DISPOSITIF ELECTRONIQUE COMPORTANT UN BUS D'INTERCONNEXION AU FORMAT ISO 7816**

(30) Priorité: 28.11.2018 FR 1872001
(71) Demandeur: IDEMIA France, 92400 Courbevoie (FR)
(72) Inventeur: MARTIN-MARTINASSO, Ludovic, 92400 COURBEVOIE (FR); WAKNIOUN, Aissa, 92400 COURBEVOIE (FR); BRICOUT, Franck, 92400 COURBEVOIE (FR); DE OLIVEIRA, Marco, 92400 COURBEVOIE (FR)
(74) Mandataire: Cabinet Beau de Loménie

(57) **Abrégé**

Ce dispositif électronique (10) est compatible avec la norme ISO 7816-4 et comporte un élément sécurisé (20), au moins un module (SMi), et une unité de communication(SO) permettant au dispositif de communiquer avec un terminal (100) conformément au protocole T=1 de la norme ISO 7816. Ce dispositif est caractérisé en ce que:
- il comporte un bus ISO 7816 (70) d'interconnexion entre le terminal (100), l'élément sécurisé (20) et lesdits modules (SMi) ;
- l'élément sécurisé (20) et lesdits modules (SMi) étant configurés pour envoyer, sur le bus (70), des trames conformes au protocole T=1, interprétables par ces éléments, et utilisant un code correcteur d'erreur propriétaire non conforme au protocole T=1 de l'ISO 7816 pour être rejetées ou ignorées par ledit terminal (100).

## Description

### Technique antérieure

La présente invention se situe dans le domaine des cartes à circuit intégré conformes au standard ISO 7816.

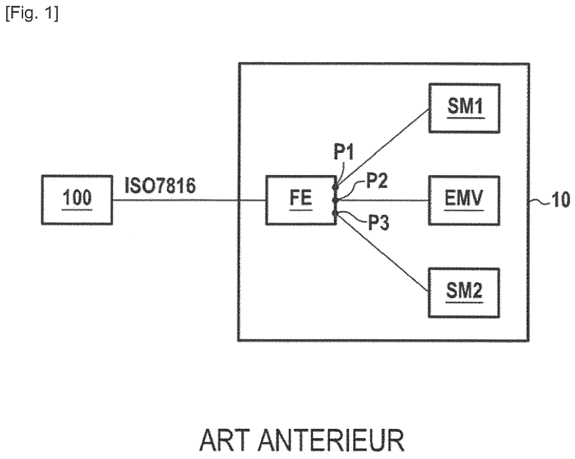

La figure 1 représente l'architecture d'une telle carte 10 conforme à l'état actuel de la technique. Cette carte à microcircuit 10 peut communiquer avec un terminal 100, typiquement un lecteur de carte, conformément au standard ISO 7816, par exemple pour effectuer une transaction bancaire. Cette carte comporte un élément sécurisé 20 conforme au standard EMV ou EMVCo (par la suite, le terme « EMV » désigne indifféremment le standard EMV ou le standard EMVCo).

Dans cet exemple, la carte à circuit intégré 10 comporte un front-end FE, configuré pour envoyer, via des ports P1, P2, P3 dédiés, des commandes aux composants auxquels ce front-end est connecté. Dans l'exemple de la figure 1, le front-end comporte :
- un port P2 pour communiquer avec l'élément sécurisé 20 ;
- un port P1 pour communiquer avec un module SM1, par exemple un capteur biométrique ;
- un port P3 pour communiquer avec un module SM2, par exemple un gestionnaire de LED.

Dans une telle architecture, l'élément sécurisé 20 et le front-end FE communiquent conformément au standard ISO 7816 ; le front-end FE communique avec chacun des autres modules SM1, SM2 en utilisant un autre protocole.

Cette architecture présente un premier inconvénient en ce qu'elle n'est pas modulaire. Il est nécessaire de revoir entièrement l'architecture de la carte pour ajouter un composant derrière le front-end FE.

Par ailleurs, selon cette architecture, seul le front-end FE est visible du terminal 100 : les communications entre le front-end FE et les autres composants ne sont pas visibles du terminal 100, de sorte qu'il est très difficile, notamment, de débugger un problème de communication entre l'élément sécurisé 20 et les autres composants.

L'invention vise une carte à circuit intégré qui ne présente pas ces inconvénients.

### Exposé de l'invention

Plus précisément, et selon un premier aspect, l'invention concerne un dispositif électronique compatible avec la norme ISO 7816-4 et comportant un élément sécurisé, au moins un module (par exemple un capteur biométrique, un gestionnaire de LED ou un écran) et une unité de communication permettant au dispositif de communiquer avec un terminal conformément au protocole T=1 de la norme ISO 7816. Ce dispositif est caractérisé en ce que:
- il comporte un bus ISO 7816 d'interconnexion entre le terminal, l'élément sécurisé et les modules ;
- l'élément sécurisé et les modules sont configurés pour pouvoir envoyer et recevoir, sur le bus, des trames conformes au protocole T=1, interprétables par ces composants, et utilisant un code correcteur d'erreur propriétaire non conforme au protocole T=1 de l'ISO 7816pour être rejetées ou ignorées par le terminal.

Ainsi, et d'une façon générale, l'invention propose un dispositif dans lequel 'élément sécurisé et différents modules sont interconnectés via un lien ISO 7816.

Ce dispositif électronique peut être constitué par une carte à circuit intégré par exemple du type de celles configurées pour réaliser des transactions conformes au standard EMV, ou des cartes d'assurance maladie. Préférentiellement, la carte, ou d'une façon plus générale, le dispositif électronique selon l'invention ne comporte pas de front-end entre le terminal et l'élément sécurisé.

De façon très avantageuse, la carte conforme à l'invention est compatible avec les lecteurs EMV, car l'élément sécurisé et les différents modules peuvent envoyer sur le bus des trames rejetées ou ignorées par le terminal.

Dans un mode de réalisation de l'invention, les trames construites pour être rejetées ou ignorées par le terminal sont conformes au protocole T=1 et utilisent un champ NAD différent de 0 et/ou un code correcteur d'erreur non conforme au protocole T=1 de l'ISO 7816.

Lorsque le terminal est parfaitement compatible avec la norme EMV, il doit rejeter les trames dont le champ NAD est différent de 0. Cependant, la Demanderesse a constaté que certains terminaux EMV ne rejettent pas toujours de telles trames. Par conséquent, la Demanderesse privilégie le mode de réalisation dans lequel les trames construites pour être rejetées ou ignorées par l'élément sécurisé utilisent :
- à la fois un champ NAD différent de 0 ; et
- un code correcteur d'erreur propriétaire non conforme au protocole T=1 de l'ISO 7816. Ce code d'erreur propriétaire est connu et partagé par l'élément sécurisé et par les modules de la carte.

Dans un mode de réalisation de l'invention, au moins l'élément sécurisé ou un des modules est configuré pour émettre une trame ISO-7816 interprétable par le terminal avant que celui-ci ne reçoive un nombre prédéterminé de trames consécutives qui seront rejetées ou ignorées par ce terminal.

Ce mode de réalisation est intéressant lorsque la carte à circuit intégré est utilisée avec un terminal qui rejette une transaction dès qu'il reçoit N trames consécutives qu'il doit ignorer ou rejeter.

Cette trame ISO-7816 interprétable peut être une trame de demande d'attente S(WTX Req.) (en anglais « Waiting Time Extension Request »).

Selon un deuxième aspect, l'invention vise aussi un élément sécurisé pouvant être incorporé dans un dispositif électronique tel que mentionné ci-dessus. Cet élément sécurisé est configuré pour :
- communiquer avec un terminal, via un bus ISO 7816, en utilisant des trames conformes au protocole T=1 de la norme ISO 7816, ces trames comportant un champ NAD égal à 0 et un code correcteur d'erreur conforme au protocole T=1 ISO 7816 ; et pour
- communiquer avec au moins un module du dispositif électronique, via le bus ISO 7816, en utilisant des trames conformes au protocole T=1, ces trames comportant dans un champ NAD l'adresse du module (en temps qu'adresse de source ou de destination selon que le module est émetteur SAD ou destinataire DAD de la trame) et un code correcteur d'erreur propriétaire non conforme au protocole T=1 de l'ISO 7816.

Selon un troisième aspect, l'invention vise un module pouvant être incorporé dans un dispositif électronique tel que mentionné ci-dessus. Ce module est configuré pour communiquer avec un élément sécurisé du dispositif électronique et éventuellement avec au moins un autre module du dispositif électronique, via un bus ISO 7816, en utilisant des trames conformes au protocole T=1, ces trames comportant l'adresse de l'élément sécurisé ou de l'autre module et un code correcteur d'erreur propriétaire non conforme au protocole T=1 de l'ISO 7816.

Dans une première variante de réalisation, le module selon l'invention ne communique qu'avec l'élément sécurisé. Ainsi, et en particulier, lorsque le module veut envoyer une trame au terminal, il l'envoie au module sécurisé pour que celui-ci la relaie au terminal.

Dans une deuxième variante de réalisation, le module selon l'invention est en outre configuré pour émettre, à destination d'un terminal, des trames conformes au protocole T=1 de la norme ISO 7816, ces trames comportant un champ NAD égal à 0 et un code correcteur d'erreur conforme au protocole T=1 de l'ISO 7816.

L'invention vise aussi un procédé de communication mis en œuvre par un élément sécurisé. Ce procédé comporte des étapes pour permettre à l'élément sécurisé :
- de communiquer avec un terminal, via un bus ISO 7816, en utilisant des trames conformes au protocole T=1 de la norme ISO 7816, ces trames comportant un champ NAD égal à 0 et un code correcteur d'erreur conforme au protocole T=1 de l'ISO 7816.

Ce procédé est caractérisé en ce qu'il comporte des étapes pour permettre à l'élément sécurisé de communiquer avec au moins un module du dispositif électronique, via le bus ISO 7816, en utilisant des trames conformes au protocole T=1, ces trames comportant l'adresse du module et un code correcteur d'erreur propriétaire non conforme au protocole T=1 de l'ISO 7816.

Dans un mode de réalisation, ce procédé comporte au moins :
- une étape pour recevoir une trame dudit terminal, cette trame comportant un champ NAD égal à 0 et un code correcteur d'erreur conforme au protocole T=1 de l'ISO 7816 ; et
- une étape pour envoyer une trame à un module de la carte, cette trame comportant l'adresse de l'élément sécurisé dans le champ SAD de la trame et l'adresse dudit module dans le champ DAD de la trame, cette trame comportant un code correcteur d'erreur propriétaire ;
- une étape pour recevoir une trame d'un module de la carte, cette trame comportant l'adresse de l'élément sécurisé dans le champ DAD de la trame et l'adresse de ce module dans le champ SAD de la trame, cette trame comportant un code correcteur d'erreur propriétaire ; et
- une étape pour envoyer une trame au terminal, cette trame comportant un champ NAD égal à 0 et un code correcteur d'erreur conforme au protocole T=1 de l'ISO 7816.

Dans un mode particulier de réalisation, ce procédé comporte une étape pour rejeter une trame si celle-ci comporte un code correcteur d'erreur qui n'est ni conforme au protocole T=1 de l'ISO 7816, ni conforme audit code correcteur d'erreur propriétaire.

L'invention vise aussi un procédé de communication mis en œuvre par un module pouvant être incorporé dans un dispositif électronique, ce procédé comportant des étapes pour permettre au module de communiquer avec un élément sécurisé du dispositif électronique et éventuellement avec au moins un autre module du dispositif électronique, via un bus ISO 7816, en utilisant des trames conformes au protocole T=1, ces trames comportant dans un champ NAD l'adresse de l'élément sécurisé ou de l'autre module et un code correcteur d'erreur non conforme au protocole T=1 de l'ISO 7816.

Dans un mode de réalisation, ce procédé comporte au moins:
- une étape pour recevoir une trame de l'élément sécurisé, cette trame comportant l'adresse de l'élément sécurisé dans le champ SAD de la trame et l'adresse du module dans le champ DAD de la trame, la trame comportant un code correcteur d'erreur propriétaire ;
- une étape pour envoyer une trame à l'élément sécurisé, cette trame comportant l'adresse de l'élément sécurisé dans le champ DAD de la trame et l'adresse dudit module dans le champ SAD de la trame, cette trame comportant un code correcteur d'erreur propriétaire.

Dans un mode de réalisation, ce procédé comporte en outre une étape pour envoyer une trame à un terminal connecté au bus ISO 7816, cette trame comportant un champ NAD égal à 0 et un code correcteur d'erreur conforme au protocole T=1 de l'ISO 7816.

Dans un mode de réalisation, ce procédé comporte une étape pour rejeter une trame si celle-ci comporte un code correcteur d'erreur qui n'est ni conforme au protocole T=1 de l'ISO 7816, ni conforme au code correcteur d'erreur propriétaire.

Dans un mode particulier de réalisation, les différentes étapes des procédés de communication selon l'invention sont déterminées par des instructions de programmes d'ordinateurs.

En conséquence, l'invention vise aussi un programme d'ordinateur, sur un support d'informations, ce programme comportant des instructions adaptées à la mise en œuvre des étapes d'un procédé de communication tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
[Fig. 1] la figure 1 déjà décrite représente une carte à circuit intégré conforme à l'art antérieur ;
[Fig. 2] la figure 2 représente un dispositif électronique conforme à un mode particulier de réalisation de l'invention ;
[Fig. 3] la figure 3 représente une trame T conforme au protocole T=1 ;
[Fig. 4A] la figure 4A illustre des échanges de trames dans un exemple de mise en œuvre de l'invention ;
[Fig. 4B] la figure 4B illustre sous forme d'organigramme les principales étapes d'un procédé mis en œuvre par un élément sécurisé conforme à l'invention selon un mode de réalisation ;
[Fig. 4C] la figure 4C illustre sous forme d'organigramme les principales étapes d'un procédé mis en œuvre par un module conforme à l'invention selon un mode de réalisation ;
[Fig. 5] la figure 5 représente une variante de mise en œuvre de l'invention; et [Fig. 6] la figure 6 représente une autre variante de mise en œuvre de l'invention.

### Description des modes de réalisation

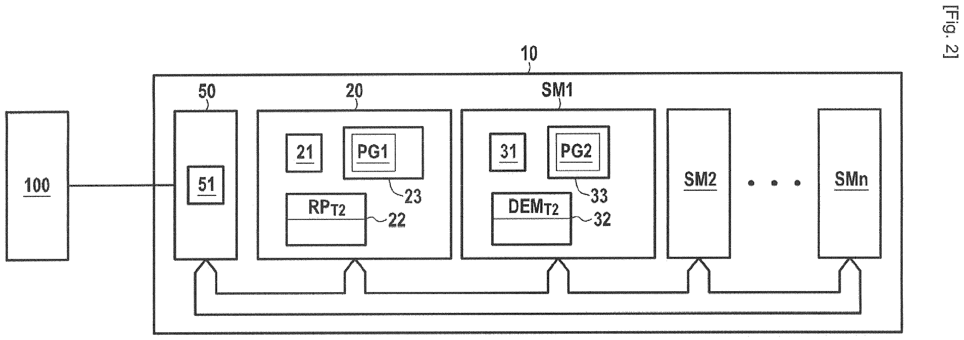

La figure 2 représente un dispositif électronique 10 conforme à un mode particulier de réalisation de l'invention.

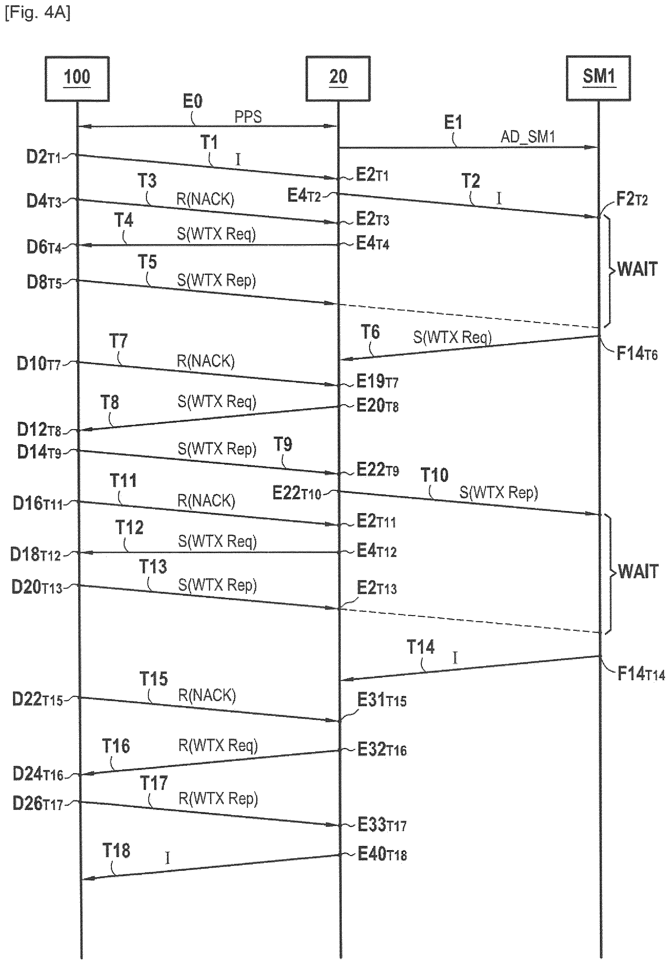

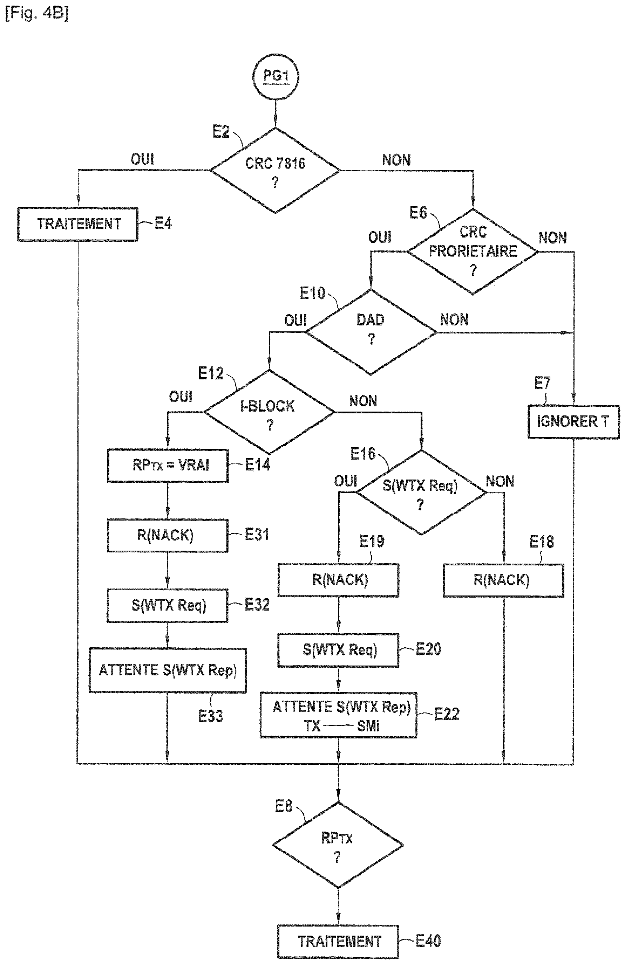

Dans le mode de réalisation décrit ici, ce dispositif électronique est une carte à circuit intégré 10 conforme au standard ISO 7816. Cette carte 10 comporte un module 20 configuré pour réaliser des transactions conformes au standard EMV. Le module 20 constitue un élément sécurisé. Il sera indifféremment appelé par la suite « module EMV » ou « élément sécurisé ». Il contient notamment un processeur cryptographique 21, une mémoire de stockage 23, une mémoire non volatile réinscriptible de type Flash 22, et une mémoire d'exécution 24. Il contient des clés cryptographiques et des applications personnalisées utilisant ces clés, notamment des applications bancaires permettant d'effectuer des transactions avec des terminaux EMV, par exemple des lecteurs de cartes, des terminaux de paiement ou des points de vente. La mémoire de stockage 23 comporte un programme d'ordinateur PG1 comportant des instructions permettant de mettre en œuvre les étapes EXX décrites ultérieurement en référence aux figures 4A et 4B. L'élément sécurisé 20 est configuré comme de façon connue pour négocier une vitesse de communication (connue sous l'acronyme PPS dans la norme ISO 7816) avec un terminal EMV.

La carte à microcircuit 10 comporte en outre des modules SMi, dont par exemple un capteur biométrique SM1 et un gestionnaire de LED SM2. L'invention peut être utilisée avec n'importe quel type de module. Sur la figure 2, seul le module SM1 est représenté en détails, mais l'architecture matérielle et logicielle des autres modules, en ce qui concerne les fonctions relatives à l'invention, peut être identique à celle du module SM1.

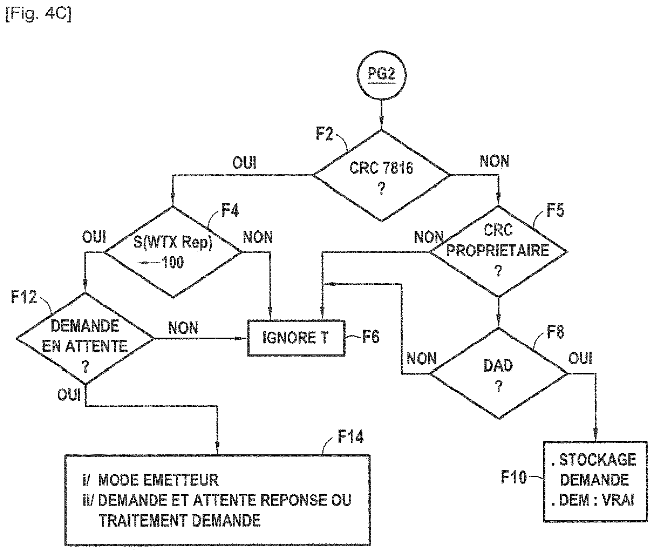

Le module SM1 comporte un processeur 31, une mémoire vive de type RAM 32, une mémoire de stockage 33 et une mémoire non volatile réinscriptible de type Flash 34. La mémoire de stockage 33 comporte un programme d'ordinateur PG2 comportant des instructions permettant de mettre en œuvre les étapes FXX décrites ultérieurement en référence aux figures 4A et 4C.

La carte à microcircuit 10 comporte une unité de communication 50. Elle permet à la carte 10 de communiquer avec un terminal EMV 100. Cette unité de communication 50 comporte notamment les contacts définis par la norme ISO 7816-2. Dans le mode de réalisation décrit ici, cette unité de communication comporte une unité 51 de communication à champ proche de type NFC.

L'unité de communication 50, l'élément sécurisé 20 et les différents modules SMi sont interconnectés par un bus 70. Les modules SMi communiquent sur ce bus ISO 7816 en respectant la vitesse PPS négociée entre le terminal et l'élément sécurisé 20.

Ce bus 70 est un lien ISO 7816. Toutes les trames qui circulent sur ce bus sont conformes au protocole T=1 défini par la norme ISO 7816 et dans la spécification EMV Book. Les trames qui circulent sur le bus sont reçues par tous les éléments connectés au bus 70 (terminal EMV 100, élément sécurisé 20, modules SMi).

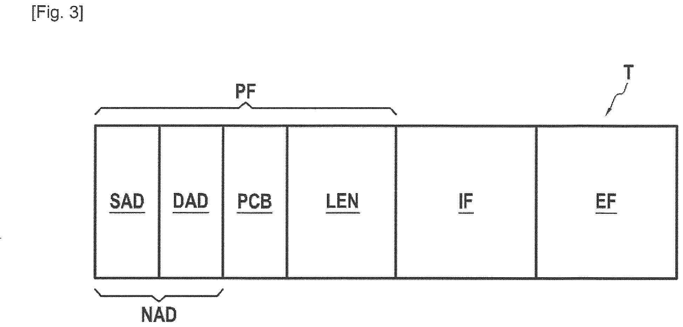

La figure 3 représente une trame T conforme au protocole T=1. Une telle trame comporte un champ prologue obligatoire PF (en anglais « Prologue field »), un champ d'information optionnel IF (en anglais « Information field ») et un champ épilogue obligatoire EP (en anglais « Epilogue field »).

La champ prologue PF comporte un champ d'adresses NAD (en anglais « Node Addressing Byte »), un champ PCB de contrôle du protocole (en anglais « Protocol Control Byte ») et un champ de longueur LEN.

Le champ d'adresses NAD comporte un champ d'adresse source SAD (en anglais « Source Node Address») qui permet d'identifier la source de la trame et un champ d'adresse destination DAD (en anglais « Destination Node Address ») qui permet d'identifier la destination de la trame.

Conformément à la norme EMV, toute trame T avec un champ d'adresse NAD non nul doit être considérée comme invalide.

Par conséquent, le terminal 100 étant conforme à la norme EMV :
- toute trame T émise par ce terminal comporte un champ NAD égal à 0 ; et
- toute trame T reçue par ce terminal et comportant un champ NAD différent de 0 doit être rejetée par ce terminal.

Le champ épilogue EP comporte un code de détection d'erreur de type LRC (sur 1 octet) ou de type CRC (sur 2 octets).

Conformément à l'invention :
- toute trame émise ou reçue par le terminal EMV 100 doit comporter un code de détection d'erreur conforme au protocole T=1 de la normeISO 7816 ;
- les communications entre l'élément sécurisé 20 et les modules SMi ou entre les modules SMi utilisent un code de détection d'erreur propriétaire, différent du code de détection d'erreur conforme au protocole T=1 de la norme ISO 7816.

Conformément à la norme EMV, le terminal EMV 100 ne communique qu'avec l'élément sécurisé 20.

Conformément au protocole T=1 de la norme ISO 7816, lorsque le terminal EMV 100 n'arrive pas à décoder une trame T, il répond par une trame R(NACK). Ceci peut se produire :
- soit parce que le terminal EMV 100 reçoit une trame avec un champ NAD différent de 0 ;
- soit parce que le terminal EMV 100 reçoit une trame avec un code de détection d'erreur ISO 7816 du protocole T=1 erroné.

Dans le mode de réalisation décrit ici, nous supposerons que lorsque le terminal EMV 100 reçoit N (par exemple 2) trames erronées consécutives, il rejette la transaction.

Dans ce mode de réalisation, l'élément sécurisé 20 et chacun des modules SMi sont configurés pour pouvoir émettre une trame ISO-7816 interprétable par le terminal EMV 100, après chaque trame erronée reçue par ce terminal pour que celui-ci ne reçoive pas deux trames erronées consécutives. Dans le mode de réalisation décrit ici, la trame utilisée à cet effet est une trame de demande d'attente S(WTX Req.).

Par ailleurs, nous rappelons que le protocole T=1 est un protocole de communication de type half-duplex, ce qui signifie que chacun des éléments étant alternativement émetteur et récepteur. Par conséquent, le terminal 100, l'élément sécurisé 20 et chacun des modules SMi :
- passe en mode récepteur lorsqu'il attend une trame ; et
- passe en mode émetteur pour envoyer une trame.

En référence aux figures 4A, 4B et 4C, nous allons maintenant décrire un exemple de mise en œuvre d'un premier mode de réalisation de l'invention.

Dans la suite de la description, la notation « ET_{TR} » désigne l'occurrence de l'étape ET pour le traitement de la trame TR.

Nous supposerons que la vitesse PPS de communication sur le bus ISO 7816 70 a été négociée entre le terminal 100 et l'élément sécurisé 20 au cours d'une étape E0.

Nous supposerons également que l'élément sécurisé 20 s'est attribué une adresse AD_20 et qu'il a attribué une adresse AD_SMI à chacun des modules SMi au cours d'une étape E1.

Dans ce premier mode de réalisation :
- toute trame envoyée par l'élément sécurisé 20 à un module SMi comporte l'adresse AD_20 dans le champ SAD et l'adresse AD_SMi dans le champ DAD et utilise le code correcteur d'erreur propriétaire ;
- toute trame envoyée par un module SMi à l'élément sécurisé 20 comporte l'adresse AD_SMi dans le champ SAD et l'adresse AD_20 dans le champ DAD et utilise le code correcteur d'erreur propriétaire ;
- toute trame envoyée par un module SMi à un autre module SMj comporte l'adresse AD_SMi dans le champ SAD et l'adresse AD_SMj dans le champ DAD et utilise le code correcteur d'erreur propriétaire ;
- toute trame envoyée par l'élément sécurisé 20 au terminal 100 comporte un champ NAD égal à 0 et utilise le code correcteur d'erreur conforme au protocole T=1 de la norme ISO-7816 ;
- toute trame envoyée par le terminal 100 à l'élément sécurisé 20 comporte un champ NAD égal à 0 et utilise le code correcteur d'erreur conforme au protocole T=1 de la norme ISO-7816 ;
- le terminal 100 n'envoie pas de trame aux modules SMi ; et
- les modules SMi n'envoient pas de trames au terminal 100.

Dans cet exemple, nous supposerons que le terminal EMV 100 envoie une trame T1 de type I-Block à l'élément sécurisé 20 pour obtenir une information du module SM1.

Le terminal EMV 100 envoie cette trame d'information T=1 au cours d'une étape D2T1. Cette trame T1 adressée à l'élément sécurisé 20 comporte un champ NAD égal à 0, un champ d'information INF représentant l'information demandée et un code de correction d'erreur conforme au standard ISO 7816.

### 1/ Traitement de la trame T1 envoyée par le terminal 100 à l'étape D2

(i) L'élément sécurisé 20 et chacun des modules SMi est configuré en mode récepteur. L'élément sécurisé reçoit la trame T1 au cours d'une étape E2_{T1} et chacun des modules SMi reçoit cette trame T1 au cours d'une étape F2T1 ;
(ii) Au cours de cette même étape F2_{T1}, chaque module SMi vérifie si le code de correction d'erreur de la trame T1 est conforme au protocole T=1 du standard ISO 7816. En l'occurrence c'est le cas et l'étape F2_{T1} est suivie par un test F4_{T1}. Au cours du test F4_{T1}, chaque module SMi vérifie si la trame T1 est une réponse à une trame de demande d'attente S(WTX Req.). Comme aucun de ces modules SMi n'a formulé une demande d'attente S(WTX Req.), chacun ignore la trame T1 (étape F6_{T1}).
(iii) Au cours de l'étape E2_{T1}, l'élément sécurisé 20 vérifie si le code de correction d'erreur de la trame T1 est conforme au protocole T=1 du standard ISO 7816. En l'occurrence c'est le cas et l'étape F2_{T1} est suivie par une étape de traitement E4_{T1}.

Au cours de cette étape E4_{T1}, l'élément sécurisé traite la demande comprise dans le champ d'information IF de la trame T1. Ce traitement consiste dans ce cas à envoyer une trame I-Block T2 au module SM1. L'élément sécurisé 20 passe en mode émetteur et effectue cet envoi (étape E4_{T2}). Cette trame T2 comporte un champ SAD comportant l'adresse de l'élément sécurisé 20, un champ DAD comportant l'adresse du module SM1, un champ d'information INF représentant l'information demandée à l'origine par le terminal 100 et un code de correction d'erreur propriétaire.

### 2. Traitement de la trame T2 envoyée par l'élément sécurisé 20 à l'étape E4_{T2}

(i) La trame T2 est reçue par le terminal EMV 100 et considérée erronée par ce terminal, d'une part car elle ne comporte pas un champ NAD égal à 0 et d'autre part car son code de correction d'erreur n'est pas conforme au standard ISO 7816. Le terminal 100 envoie donc une trame T3 R(NACK), au cours d'une étape D4_{T3}.
(ii) Chacun des modules SMi reçoit la trame T2 au cours d'une étape F2_{T2} et vérifie si le code de correction d'erreur de cette trame est conforme au protocole T=1 du standard ISO 7816. En l'occurrence ce n'est pas le cas car la trame a été émise par l'élément sécurisé 20 ; l'étape F2 est suivie par un test F5_{T2} au cours duquel le module SMi vérifie si le code correcteur d'erreur est conforme au code propriétaire. Si ce n'est pas le cas, la trame est rejetée (étape F5_{T2}). Si le code correcteur d'erreur est conforme au code propriétaire, l'étape F5T2 est suivie par une étape F8_{T2}.

Au cours de ce test F8_{T2}, chaque module SMi vérifie si la trame T2 lui est destinée en comparant son adresse avec l'adresse contenue dans le champ DAD. Pour les modules SM2, ..., SMn ce n'est pas le cas et ils ignorent la trame T2 (étape F6_{T2}).

Pour le module SM1, le résultat du test F8_{T2} est positif. Il mémorise (étape F10_{T2}) la demande T2 pour un traitement ultérieur et positionne une variable DEM_{T2} à « Vrai ». Dans le mode de réalisation décrit ici, cette variable DEM_{T2} représentative du traitement en attente de la demande T2 est enregistrée dans la mémoire volatile 32 de ce module.

Dans le mode de réalisation décrit ici, le module SM1 attend, avant de poursuivre son traitement, la réception d'une trame S(WTX Rep.) (en anglais « Wait Time Extension Response ») qui sera envoyée par le terminal EMV 100 en réponse à une demande d'attente S(WTX Req.) que va faire l'élément sécurisé 20 pour éviter un rejet de la transaction par le terminal 100 lorsque celui-ci détecte la trame T2.

### 3/ Traitement de la trame T3 R(NACK) envoyée par le terminal 100 à l'étape D4T3

(i) L'élément sécurisé 20 reçoit la trame T3 R(NACK) au cours d'une étape E2_{T3} et vérifie si le code de correction d'erreur de cette trame est conforme au protocole T=1 du standard ISO 7816 (étape E2). En l'occurrence c'est le cas et la trame R(NACK) est traitée au cours d'une étape E4_{T4}. Ce traitement consiste à envoyer une trame T4 de demande d'attente S(WTX Req.) au terminal 100, ce afin de s'assurer que le terminal EMV 100 ne recevra pas deux trames consécutives qu'il ne pourra pas interpréter.
(ii) Les modules SM2 à SMn ignorent la trame T3 (étapes F2_{T3}, F4_{T3}, F6_{T3}). Le module SM1 reste en attente d'une trame S(WTX Rep.) en provenance du terminal EMV 100.

### 4/ Traitement de la trame T4 de demande d'attente envoyée par l'élément sécurisé 20 à l'étape E4_{T4}

(i) Le terminal 100 reçoit la trame T4 de demande d'attente (étape D6_{T4}) et y répond comme de façon connue, par l'envoi d'une trame T5 de réponse S(WTX Rep.) au cours d'une étape D8_{T5}.
(ii) Les modules SM2 à SMn déterminent au cours de l'étape F2T4 que le code correcteur d'erreur de la trame T4 est un code ISO 7816 T=1 et ignorent cette trame (étape F6_{T6}) car ils n'attendent pas de réponse S(WTX Rep.) (étape F4_{T6}). Le module SM1 reste en attente d'une trame S(WTX Rep.) (étape F4_{T4}) en provenance du terminal EMV 100.

### 5/ Traitement de la trame T5 de réponse S(WTX Rep.) envoyée par le terminal 100 à l'étape D8_{T5}

(i) L'élément sécurisé 20 reçoit la trame T5 à l'étape E2_{T5}. Le traitement de cette trame S(WTX Rep.) consiste à ne rien faire (étape E4_{T5}).
(ii) Les modules SMi détectent au cours de l'étape F2_{T5} que le code correcteur d'erreur de la trame T5 est un code ISO 7816 T=1 et au cours du test F4_{T5} que la trame T5 est une réponse S(WTX Rep.) à une demande d'attente WTX.

Les modules SM2 à SMn n'attendent pas une telle trame et ils l'ignorent (étape F6_{T5}).

En revanche, le module SM1 qui était en attente de cette trame peut poursuivre son traitement. Il détermine à l'étape F12_{T5} qu'il a une demande en attente (suite à la réception de la trame T2), et il commence le traitement de cette demande au cours d'une étape F14_{T5}. Ce traitement peut consister :
- soit à envoyer directement une réponse à la demande ;
- soit, si le module SM1 considère que le traitement peut être trop long, et afin d'éviter que le terminal 100 ne rejette la transaction, à envoyer une demande d'attente S(WTX Req.) à l'élément sécurisé 20 pour que celui-ci la relaie au terminal EMV 100. Nous supposerons que c'est le cas dans cet exemple et que le module SM1 envoie une trame T6 de demande d'attente S(WTX Req.) à l'élément sécurisé 20 (étape F14_{T6}). Il se place alors en attente d'une réponse S(WTX Rep.) en provenance du module sécurisé 20.

### 6/ Traitement de la trame T6 de demande d'attente S(WTX Req.) envoyée par le module SM1 à l'étape F14_{T6}

(i) La trame T6 est reçue par le terminal EMV 100 et considérée erronée par ce terminal. Le terminal 100 envoie donc une trame T7 R(NACK), au cours d'une étape D10_{T7}.
(ii) Les modules SM2 à SMn ignorent cette trame T6 qui ne leur est pas destinée (étapes F2_{T7}, F5_{T7}, F8_{T7}, F6_{T7}).
(iii) L'élément sécurisé 20 reçoit la trame T6 à l'étape E2_{T6} et détermine que le code correcteur d'erreur n'est pas conforme à celui du protocole T=1 de l'ISO 7816. Il vérifie au cours d'une étape E6_{T6} que le code correcteur d'erreur est conforme au code correcteur propriétaire. Si ce n'était pas le cas, il ne traiterait pas cette trame T6 (étape E7).

Si le code correcteur d'erreur est conforme au code correcteur propriétaire, l'élément sécurisé 20, détermine s'il est destinataire de la trame T6 en comparant son adresse à celle contenue dans le champ DAD (étape E10_{T7}). Si ce n'était pas le cas, il ne traiterait pas cette trame T6 (étape E7).

Si l'élément sécurisé 20 détermine qu'il est destinataire de la trame T6 (test E10_{T6}), il vérifie si cette trame est de type I-Block (étape E12_{T6}). Si c'est le cas, il mémorise dans un indicateur RPT2 le fait qu'il a reçu une réponse du module SM1 en réponse à sa trame T2 (étape E14). Dans le mode de réalisation décrit ici, cet indicateur RPT2, est enregistré dans la mémoire Flash 22 de l'élément sécurisé 20.

En l'occurrence, l'élément sécurisé 20 n'a pas reçu de réponse à sa trame T2 et l'élément sécurisé 20 vérifie si cette trame T6 est une trame de demande d'attente S(WTX Req.) (étape E16_{T6}). Si ce n'est pas le cas, il envoie une trame R(NACK) à l'émetteur de la trame (étape E18).

Dans le cas présent, la trame T6 est une trame S(WTX Req.). L'élément sécurisé 20 sait que cette trame sera rejetée par une réponse R(NACK) par le terminal EMV 100. Par conséquent, l'élément sécurisé 20 :
- attend de recevoir cette réponse R(NACK) (voir étape E19) ;
- pour envoyer (voir étape E20), sur réception du R(NACK), une demande d'attente S(WTX Req.) au terminal EMV 100 ;
- puis attendre la réponse S(WTX Rep.) du terminal EMV 100 pour la transférer au module SM1 (voir étape E22).

### 7/ Traitement de la trame T7 R(NACK) envoyée par le terminal EMV 100 à l'étape D10_{T7}

(i) L'élément sécurisé 20 reçoit la trame T7 qu'il attendait (étape E19_{T7}) et envoie (étape E20_{T8}) une trame T8 de demande d'attente S(WTX Req.) au terminal 100.
(ii) Les modules SM2 à SMn ignorent la trame T7 (étapes F2_{T7}, F4_{T7}, F6_{T7}). Suite à l'envoi de sa trame T6, le module SM1 reste en attente d'une réponse S(WTX Rep.) en provenance du module sécurisé 20.

### 8/ Traitement de la trame T8 de demande d'attente S(WTX Req.) envoyée par l'élément sécurisé 20 à l'étape E20_{T8}

(i) Le terminal EMV 100 reçoit cette trame au cours d'une étape D12_{T8} et y répond par l'envoi d'une trame T9 de réponse R(WTX Rep.) au cours d'une étape D14_{T9}.
(ii) Les modules SM2 à SMn ignorent la trame T7 (étapes F2_{T8}, F4_{T8}, F6_{T8}). Suite à l'envoi de sa trame T6, le module SM1 reste en attente d'une réponse S(WTX Rep.) en provenance du module sécurisé 20.

### 9/ Traitement de la trame T9 de réponse R(WTX Rep.) à une demande d'attente envoyée par le terminal 100 à l'étape D14_{T9}

(i) L'élément sécurisé 20 reçoit la trame T9 qu'il attendait (étape E22_{T9}). Il envoie par conséquent une trame T10 S(WTX Rep.) en réponse à la trame T6 au cours d'une étape E22_{T10}.
(ii) Les modules SM2 à SMn ignorent la trame T9 (étapes F2_{T9}, F4_{T9}, F6_{T9}). Suite à l'envoi de sa trame T6, le module SM1 reste en attente d'une réponse S(WTX Rep.) en provenance du module sécurisé 20.

### 10/ Traitement de la trame T10 S(WTX Rep.) envoyée par l'élément sécurisé 20 à l'étape E22

(i) La trame T10 est reçue par le terminal EMV 100 et considérée erronée par ce terminal. Le terminal 100 envoie donc une trame T11 R(NACK), au cours d'une étape D16T11.
(ii) Les modules SM2 à SMn ignorent cette trame T10 qui ne leur est pas destinée (étapes F2_{T10}, F5_{T10}, F8_{T10}, F6_{T10}).

Le module SM1 détermine que cette trame T10 est une réponse de l'élément sécurisé 20 à sa trame T6. Dans le mode de réalisation décrit ici, le module SM1 attend, avant de poursuivre son traitement, la trame de réponse S(WTX Rep.) qui sera envoyée par le terminal EMV 100 en réponse à la demande d'attente S(WTX Req.) que va faire l'élément sécurisé 20 pour éviter que le terminal ne rejette la transaction sur détection de la trame T10.

### 11/Traitement de la trame T11 R(NACK) envoyée par le terminal 100 à l'étape D16_{T11}

(i) L'élément sécurisé 20 reçoit la trame T16 R(NACK) au cours d'une étape E2_{T11} et y répond en envoyant (étape E4_{T12}) une trame T12 de demande d'attente S(WTX Req.) au terminal 100, ce afin de s'assurer que le terminal EMV 100 ne recevra pas deux trames non interprétables par lui consécutives.
(ii) Les modules SM2 à SMn ignorent la trame T11 (étapes F2_{T11}, F4_{T11}, F6_{T11}). Le module SM1 reste en attente d'une trame S(WTX Rep.) en provenance du terminal EMV 100.

### 12/ Traitement de la trame T12 de demande d'attente S(WTX Req.) envoyée par l'élément sécurisé 20 à l'étape E4_{T12}

(i) Le terminal 100 reçoit la trame T12 de demande d'attente (étape D18_{T12}) et y répond comme de façon connue, par l'envoi d'une trame T13 de réponse S(WTX Rep.) au cours d'une étape D20_{T13}.
(ii) Les modules SM2 à SMn déterminent au cours de l'étape F2_{T12} que le code correcteur d'erreur de la trame T12 est un code ISO 7816 T=1 et ignorent cette trame (étape F6_{T12}) car ils n'attendent pas de réponse S(WTX Rep.) (étape F4_{T12}).

Le module SM1 reste en attente d'une trame S(WTX Rep.) en provenance du terminal EMV 100.

### 13/ Traitement de la trame T13 de réponse S(WTX Rep.) envoyée par le terminal 100 à l'étape D20_{T13}

(i) L'élément sécurisé 20 reçoit la trame T1 3 à l'étape E2_{T13}. Le traitement de cette trame S(WTX Rep.) consiste à ne rien faire (étape E4_{T13}).
(ii) Les modules SMi détectent au cours de l'étape F2_{T13} que le code correcteur d'erreur de la trame T5 est un code ISO 7816 T=1 et au cours du test F4_{T5} que la trame T5 est une réponse S(WTX Rep.) à une demande d'attente WTX.

Les modules SM2 à SMn n'attendent pas une telle trame et ils l'ignorent (étape F6_{T13}).

En revanche, le module SM1 était en attente de cette trame peut poursuivre son traitement. Il détermine à l'étape F12_{T13} qu'il a une demande en attente (suite à la réception de la trame T2), et il poursuit traitement de cette demande au cours d'une étape F14_{T13}.

Dans le cas présent le module SM1 est maintenant en mesure de terminer rapidement le traitement de la demande reçue dans la trame T2. Par conséquent, le module SM1 n'envoie pas de demande d'attente S(WTX Rep.) mais une trame T14 de type I-Block comportant la réponse à cette demande (étape F14_{T14}).

### 14/ Traitement de la trame T14 de type I-Block envoyée par le module SM1 à l'étape F14_{T14}

(i) La trame T14 est reçue par le terminal EMV 100 et considérée erronée par ce terminal. Le terminal 100 envoie donc une trame T15 R(NACK), au cours d'une étape D22_{T15}.
(ii) L'élément sécurisé 20 détermine que le code correcteur d'erreur de la trame T14 est propriétaire (étapes E2_{T14} et E6_{T14}), qu'il est destinataire de la trame T14 (test E10_{T14}), et que cette trame est de type I-Block (étape E12_{T14}). Il détermine par conséquent que la trame T14 constitue une réponse à la trame T2 et positionne donc l'indicateur RPT2 à VRAI (étape E14_{T14}). Puis, l'élément sécurisé 20 :
   - attend de recevoir une réponse R(NACK) (étape E31) ;
   - pour envoyer (étape E32), sur réception du R(NACK), une demande d'attente S(WTX Req.) au terminal EMV 100 et attendre la réponse S(WTX Rep.) du terminal EMV 100 (étape E33).
(iii) Les modules SM2 à SMn ignorent la trame T14 qui ne leur est pas destinée (étapes F2_{T14}, F5_{T14}, F8_{T14}, F6_{T14}).

### 15/ Traitement de la trame T15 R(NACK) envoyée par le terminal EMV 100 à l'étape D22T15

(i) L'élément sécurisé 20 reçoit la trame T15 qu'il attendait (étape E31T15) et envoie (étape E32T16) une trame T16 de demande d'attente S(WTX Req.) au terminal 100.
(ii) Les modules SM1 à SMn ignorent la trame T15 (étapes F2T15, F4 T15, F6 T15).

### 16/ Traitement de la trame T16 de demande d'attente S(WTX Req.) envoyée par l'élément sécurisé 20 à l'étape E32_{T16}

(i) Le terminal EMV 100 reçoit cette trame au cours d'une étape D24_{T16} et y répond par l'envoi d'une trame T17 de réponse R(WTX Rep.) au cours d'une étape D26_{T17}.
(ii) Les modules SM1 à SMn ignorent la trame T16 car aucun n'est en attente d'une réponse S(WTX Rep.) en provenance du terminal 100 (étapes F2_{T16}, F4_{T16}, F6_{T16}).

### 17/ Traitement de la trame T17 de réponse R(WTX Rep.) à une demande d'attente envoyée par le terminal 100 à l'étape D26T17

(i) Les modules SM1 à SMn ignorent la trame T17 car aucun n'est en attente d'une réponse S(WTX Rep.) en provenance du terminal 100 (étapes F2_{T17}, F4_{T17}, F6_{T17}).
(ii) L'élément sécurisé 20 reçoit (étape E33_{T17}) la trame T17 qu'il attendait. Cette étape E33 est suivie par l'étape E8_{T17} au cours de laquelle l'élément sécurisé 20 détermine par lecture de la variable RP_{T2} qu'il a reçu une réponse du module SM1 en réponse à sa trame T2.

L'élément sécurisé envoie une trame I-Block T18 au terminal EMV 100 au cours d'une étape E40_{T18}. Cette trame comporte dans son champ IF, la réponse à la demande exprimée par le terminal EMV 100 dans sa trame T1.

### Variantes

Dans le mode de réalisation décrit précédemment, les modules SMi ne communiquent pas avec le terminal EMV 100.

En variante, ils peuvent envoyer des trames T=1 au terminal EMV 100 en positionnant dans ces trames le champ NAD à 0 et en utilisant un code correcteur d'erreur conforme au protocole T=1 de l'ISO 7816.

Ainsi, en variante :
- toute trame envoyée par l'élément sécurisé 20 à un module SMi comporte l'adresse AD_20 dans le champ SAD et l'adresse AD_SMi dans le champ DAD et utilise le code correcteur d'erreur propriétaire ;
- toute trame envoyée par un module SMi à l'élément sécurisé 20 comporte l'adresse AD_SMi dans le champ SAD et l'adresse AD_20 dans le champ DAD et utilise le code correcteur d'erreur propriétaire ;
- toute trame envoyée par un module SMi à un autre module SMj comporte l'adresse AD_SMi dans le champ SAD et l'adresse AD_SMj dans le champ DAD et utilise le code correcteur d'erreur propriétaire ;

- toute trame envoyée par l'élément sécurisé 20 au terminal 100 comporte un champ NAD égal à 0 et utilise le code correcteur d'erreur conforme au protocole T=1 de l'ISO-7816 ;
- toute trame envoyée par le terminal 100 à l'élément sécurisé 20 comporte un champ NAD égal à 0 et utilise le code correcteur d'erreur conforme au protocole T=1 de l'ISO-7816 ;
- toute trame envoyée par un module SMi au terminal EMV 100 comporte un champ NAD égal à 0 et utilise le code correcteur d'erreur conforme au protocole T=1 de l'ISO-7816 ; et
- le terminal 100 n'envoie pas de trame aux modules SMi.

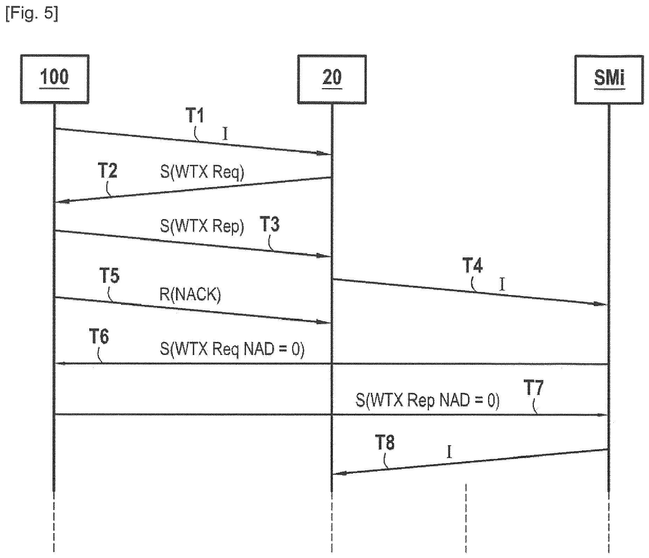

Par exemple, dans un mode de réalisation représenté à la figure 5, lorsque le module SMi détecte une trame T3 R(NACK) adressée à l'élément sécurisé 20, il génère lui-même une trame de demande d'attente S(WTX Req.) avec un champ NAD à 0 et un code correcteur d'erreur conforme au protocole T=1 de l'ISO 7816. Il attend ensuite la réponse à cette demande (trame T7) pour émettre la prochaine trame sur le bus ISO 7816.

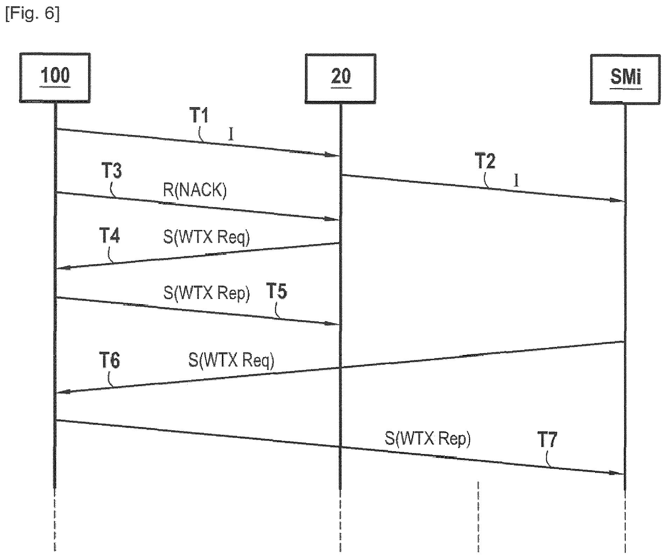

Encore en variante, et comme représenté à la figure 6, le module SMi peut spontanément envoyer une trame T6 de demande d'attente S(WTX Req.) avec un champ NAD à 0 et un code correcteur d'erreur conforme au protocole T=1 de l'ISO 7816, s'il considère qu'il a besoin de temps pour traiter une demande et attendre la réponse à cette demande (trame T7) pour poursuivre son traitement.

## Revendications

1. Dispositif électronique (10) compatible avec la norme ISO 7816-4 et comportant un élément sécurisé (20), au moins un module (SMi), et une unité de communication(50) permettant au dispositif (10) de communiquer avec un terminal (100) conformément au protocole T=1 de la norme ISO 7816, le dispositif étant **caractérisé en ce que**:
- il comporte un bus ISO 7816 (70) d'interconnexion entre ledit terminal (100), ledit élément sécurisé (20) et lesdits modules (SMi) ;
- ledit élément sécurisé (20) et lesdits modules (SMi) étant configurés pour envoyer et recevoir, sur ledit bus (70), des trames conformes au protocole T=1, interprétables par ces éléments, et utilisant un code correcteur d'erreur propriétaire non conforme au protocole T=1 de l'ISO 7816 pour être rejetées ou ignorées par ledit terminal (100).

2. Dispositif électronique (10) selon la revendication 1, **caractérisé en ce que** au moins ledit élément sécurisé (20) ou un desdits modules (SMi) est configuré pour émettre une trame ISO-7816 interprétable par ledit terminal (100) avant que celui-ci ne reçoive un nombre prédéterminé (N) de trames consécutives qui seront rejetées ou ignorées par ledit terminal (100).

3. Dispositif électronique (10) selon la revendication 2 **caractérisé en ce que** ladite trame ISO-7816 interprétable est une trame de demande d'attente S(WTX Req.).

4. Dispositif électronique (10) selon l'une quelconque des revendications 1 à 3, **caractérisé en ce que** ledit au moins un module est un capteur biométrique, un gestionnaire de LED ou un afficheur.

5. Elément sécurisé (20) pouvant être incorporé dans un dispositif électronique (10) selon l'une quelconque des revendications 1 à 4, ledit élément sécurisé étant configuré pour :
- communiquer avec un terminal (100), via un bus ISO 7816 (70), en utilisant des trames conformes au protocole T=1 de la norme ISO 7816, lesdites trames comportant un champ NAD égal à 0 et un code correcteur d'erreur conforme au protocole T=1 de l'ISO 7816 ; et pour
- communiquer avec au moins un module (SMi) du dispositif électronique, via ledit bus ISO 7816 (70), en utilisant des trames conformes au protocole T=1, ces trames comportant l'adresse dudit module (SMi) et un code correcteur d'erreur propriétaire non conforme au protocole T=1 de l'ISO 7816.

6. Module (SMi) pouvant être incorporé dans un dispositif électronique (10) selon l'une quelconque des revendications 1 à 5, ledit module étant configuré pour communiquer avec un élément sécurisé (20) dudit dispositif électronique et éventuellement avec au moins un autre module (SMi) dudit dispositif électronique, via un bus ISO 7816 (70), en utilisant des trames conformes au protocole T=1, ces trames comportant l'adresse dudit élément sécurisé (20) ou dudit au moins un autre module et un code correcteur d'erreur propriétaire non conforme au protocole T=1 de l'ISO 7816.

7. Module (SMi) conforme à la revendication 6, ledit module étant configuré pour émettre, à destination d'un terminal (100), des trames conformes au protocole T=1 de la norme ISO 7816, lesdites trames comportant un champ NAD égal à 0 et un code correcteur d'erreur conforme au protocole T=1 de l'ISO 7816.

8. Procédé de communication mis en œuvre par un élément sécurisé (20), ledit procédé comportant des étapes pour permettre à l'élément sécurisé :
- de communiquer avec un terminal (100), via un bus ISO 7816 (70), en utilisant des trames conformes au protocole T=1 de la norme ISO 7816, lesdites trames comportant un champ NAD égal à 0 et un code correcteur d'erreur conforme au protocole T=1 de l'ISO 7816 ;
- ledit procédé étant **caractérisé en ce qu'**il comporte des étapes pour permettre audit élément sécurisé de communiquer avec au moins un module (SMi) du dispositif électronique, via ledit bus ISO 7816 (70), en utilisant des trames conformes au protocole T=1, ces trames comportant l'adresse dudit module (SMi) et un code correcteur d'erreur propriétaire non conforme au protocole T=1 de l'ISO 7816.

9. Procédé selon la revendication 8, **caractérisé en ce qu'**il comporte au moins:
- une étape (E2) pour recevoir une trame (T1) dudit terminal (100), ladite trame comportant un champ NAD égal à 0 et un code correcteur d'erreur conforme au protocole T= 1 de l'ISO 7816 ;
- une étape (E4) pour envoyer une trame (T2) audit module (SMi), ladite trame comportant l'adresse (AD_20) dudit élément sécurisé (20) dans le champ SAD de la trame et l'adresse (AD_SMi) dudit module (SMi) dans le champ DAD de la trame, ladite trame comportant un code correcteur d'erreur propriétaire ;
- une étape (E12) pour recevoir une trame (T14) dudit module (SMi), ladite trame comportant l'adresse (AD_20) dudit élément sécurisé (20) dans le champ DAD de la trame et l'adresse (AD_SMi) dudit module (SMi) dans le champ SAD de la trame, ladite trame comportant un code correcteur d'erreur propriétaire ; et
- une étape (E40) pour envoyer une trame (T18) audit terminal (100), ladite trame comportant un champ NAD égal à 0 et un code correcteur d'erreur conforme au protocole T=1 de l'ISO 7816.

10. Procédé selon la revendication 8 ou 9, **caractérisé en ce qu'**il comporte une étape (E7) pour rejeter une trame si celle-ci comporte un code correcteur d'erreur qui n'est ni conforme au protocole T=1 de l'ISO 7816, ni conforme audit code correcteur d'erreur propriétaire.

11. Procédé de communication mis en œuvre par un module (SMi) pouvant être incorporé dans un dispositif électronique (10), ledit procédé comportant des étapes pour permettre audit module (SMi) de communiquer avec un élément sécurisé (20) dudit dispositif électronique et éventuellement avec au moins un autre module (SMj) dudit dispositif électronique, via un bus ISO 7816 (70), en utilisant des trames conformes au protocole T=1, ces trames comportant l'adresse dudit élément sécurisé (20) ou dudit au moins un autre module et un code correcteur d'erreur propriétaire non conforme au protocole T=1 de l'ISO 7816.

12. Procédé selon la revendication 11, **caractérisé en ce qu'**il comporte au moins:
- une étape pour recevoir une trame (T2) dudit élément sécurisé, ladite trame comportant l'adresse (AD_20) dudit élément sécurisé (20) dans le champ SAD de la trame et l'adresse (AD_SMi) dudit module (SMi) dans le champ DAD de la trame, ladite trame comportant un code correcteur d'erreur propriétaire ;
- une étape (E12) pour envoyer une trame (T14) audit élément sécurisé (20), ladite trame comportant l'adresse (AD_20) dudit élément sécurisé (20) dans le champ DAD de la trame et l'adresse (AD_SMi) dudit module (SMi) dans le champ SAD de la trame, ladite trame comportant un code correcteur d'erreur propriétaire.

13. Procédé selon la revendication 11 ou 12, **caractérisé en ce qu'**il comporte au moins:
- une étape pour envoyer une trame à un terminal (100) connecté audit bus ISO 7816, ladite trame comportant un champ NAD égal à 0 et un code correcteur d'erreur conforme au protocole T=1 de l'ISO 7816.

14. Procédé selon l'une quelconque des revendications 11 à 13, **caractérisé en ce qu'**il comporte une étape (F5) pour rejeter une trame si celle-ci comporte un code correcteur d'erreur qui n'est ni conforme au protocole T=1 de l'ISO 7816, ni conforme audit code correcteur d'erreur propriétaire.

15. Programme d'ordinateur (PG1) sur un support d'information, ledit programme étant susceptible d'être mis en œuvre par un élément sécurisé incorporé dans un dispositif électronique (10)r, ce programme comportant des instructions adaptées à la mise en œuvre d'un procédé de communication selon l'une quelconque des revendications 8 à 10.

16. Programme d'ordinateur (PG2) sur un support d'information, ledit programme étant susceptible d'être mis en œuvre par un module incorporé dans dispositif électronique (10), ce programme comportant des instructions adaptées à la mise en œuvre d'un procédé de communication selon l'une quelconque des revendications 11 à 14.

17. Support d'enregistrement lisible par un ordinateur sur lequel est enregistré un programme d'ordinateur selon la revendication 15 ou 16.
